(19) Europäisches Patentamt
European Patent Office
Office européen des brevets

(11) EP 1 274 780 B1

(12) # EUROPÄISCHE PATENTSCHRIFT

(45) Veröffentlichungstag und Bekanntmachung des Hinweises auf die Patenterteilung:
**23.03.2005 Patentblatt 2005/12**

(21) Anmeldenummer: **01923682.7**

(22) Anmeldetag: **19.03.2001**

(51) Int Cl.7: **C08K 5/101**, C08L 69/00

(86) Internationale Anmeldenummer:
**PCT/EP2001/003115**

(87) Internationale Veröffentlichungsnummer:
**WO 2001/074935 (11.10.2001 Gazette 2001/41)**

(54) **ZUSAMMENSETZUNGEN ENTHALTEND POLYCARBONAT**

COMPOSITIONS CONTAINING POLYCARBONATE

COMPOSITIONS CONTENANT DU POLYCARBONATE

(84) Benannte Vertragsstaaten:
**AT BE CH CY DE DK ES FI FR GB GR IE IT LI LU MC NL PT SE TR**

(30) Priorität: **30.03.2000 DE 10015863**

(43) Veröffentlichungstag der Anmeldung:
**15.01.2003 Patentblatt 2003/03**

(73) Patentinhaber: **Bayer MaterialScience AG**
**51368 Leverkusen (DE)**

(72) Erfinder:
- **GORNY, Rüdiger**
  **47800 Krefeld (DE)**
- **ANDERS, Siegfried**
  **51147 Köln (DE)**
- **NISING, Wolfgang**
  **53757 St. Augustin (DE)**

(56) Entgegenhaltungen:
**EP-A- 0 552 680** **US-A- 4 446 268**
**US-A- 5 001 180** **US-A- 5 055 508**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 274 780 B1

## Beschreibung

Die vorliegende Erfindung betrifft Zusammensetzungen enthaltend Polycarbonat und Ester aus einer linearen Carbonsäure einem verzweigten Alkohol, und einen linearen Alkohol sowie Erzeugnisse hergestellt aus diesen Zusamensetzungen.

Zusammensetzungen, die Polycarbonate enthalten, stellen vielfach verwendete Kunststoffe dar. Sie werden in den verschiedensten Bereichen eingesetzt. Durch übliche Verarbeitungsmethoden wie beispielsweise Spritzguss oder Extrusion werden aus den Zusammensetzungen verschiedenste Erzeugnisse beispielsweise Platten hergestellt.

Die Zusammensetzungen enthalten neben Polycarbonat üblicherweise weitere die Eigenschaften der Zusammensetzung verbessernde Bestandteile. Hierzu gehören beispielsweise Gleitmittel. Als Gleitmittel werden beispielsweise Carbonsäureester eingesetzt.

Zusammensetzungen enthaltend Polycarbonat und Guerbetalkohole sind bekannt. Guerbetalkohole sind die Produkte der Guerbet-Reaktion.

Polycarbonatplatten sind beispielsweise aus der EP-A 0 110 221 bekannt und werden für eine Vielzahl von Anwendungszwecken bereitgestellt. Die Herstellung der Polycarbonatplatten erfolgt beispielsweise durch Extrusion von Zusammensetzungen, die Polycarbonat enthalten.

Coextrusion mit Zusammensetzungen, die Polycarbonat enthalten und die zusätzlich UV-Absorber enthalten, ist möglich.

Ein bei der Extrusion solcher Platten auftretendes Problem ist das Absetzen flüchtiger Bestandteile aus der Formmasse am Kalibrator (bei Stegplatten) oder auf den Walzen (bei Massivplatten), die zu Oberflächenstörungen auf den Platten führen können. Flüchtige Bestandteile sind beispielsweise UV-Absorber, Entformungsmittel und andere niedermolekulare Bestandteile der Zusammensetzungen.

EP-A 0 320 632 beschreibt coextrudierte Platten aus Zusammensetzungen, die Polycarbonat enthalten, einen UV-Absorber enthalten und ein Gleitmittel enthalten können. Nachteilig ist, dass bei länger andauernder Extrusion der Zusammensetzung gemäß EP-A 0 320 632 zu Platten, die Oberfläche der Platten durch Ausdampfungen aus der Schmelze der Zusammensetzungen nachteilig beeinflusst wird. Bei der Coextrusion führt das vermehrte Ausdampfen des UV-Absorbers aus der Schmelze der Zusamensetzungen zur Belagsbildung am Kalibrator oder auf den Walzen und schließlich zur Bildung von Störungen der Plattenoberfläche (z.B. weiße Flecken, Welligkeit usw.). Am Kalibrator kann außerdem der Polycarbonatabrieb zu pulverigen Ablagerungen auf den coextrudierten Polycarbonatplatten führen.

Auch Zusammensetzungen von Estern von Guerbetalkoholen und Polycarbonaten sind bekannt. So beschreibt EP-A 0 390 994 Zusammensetzungen, die Polycarbonat, spezielle Fettsäureester von Guerbetalkoholen als Entformungsmittel enthalten.

EP-A 0 649 724 beschreibt ein Verfahren zur Herstellung von mehrschichtigen Platten aus verzweigten Polycarbonaten mit mittleren molaren Massen $\bar{M}_w$ von 27.000 g/mol bis 29.500 g/mol durch Coextrusion einer Kernschicht und mindestens einer Deckschicht mit 1 bis 15 Gew.-% eines UV-Absorbers. Werden in den Zusammensezungen zur Herstellung dieser Kunststofftafeln die in EP-A 0 300 485 beschriebenen Entformungsmittel Glycerinmonostearat, Pentaerythrittetrastearat oder deren Mischungen eingesetzt, stellt sich mit der Zeit dennoch eine Verschlechterung der Oberflächen der Platten ein.

Aus WO 99/05205 ist bekannt, dass Entformungsmittelgemische z.B. aus Fettsäureestern des Pentaerythrits und des Glycerins verwendet werden können, um die Belagsbildung am Kalibrator oder auf den Walzen, die zur Bildung von Störungen der Plattenoberfläche (z.B. weiße Flecken, Welligkeit usw.) führt, zu minimieren.

Der vorliegenden Erfindung liegt somit die Aufgabe zugrunde, Zusammensetzungen, die Polycarbonat enthalten, zur Verfügung zu stellen, die die genannten Nachteile der aus dem Stand der Technik bekannten Zusammensetzungen nicht aufweisen.

Die erfindungsgemäße Aufgabe wird gelöst durch Zusammensetzungen, enthaltend

Polycarbonat und

eine oder mehrere verschiedene Verbindungen der allgemeinen Formel (I)

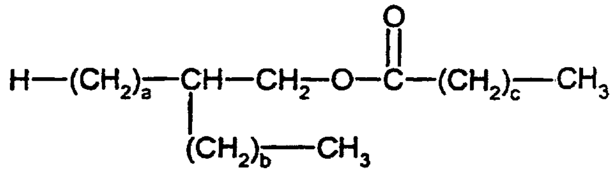

(I),

wobei

- a gleich 1 bis 20,
- b gleich 1 bis 25 und
- c gleich 10 bis 40 ist, und

zusätzlich eine oder mehrere verschiedene Verbindungen der allgemeinen Formel (I)

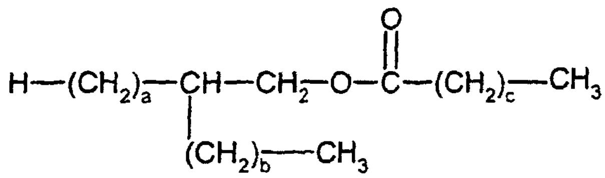

(I),

wobei

- a gleich 0,
- b gleich 1 bis 25 und
- c 10 bis 40 ist,

enthalten.

Für den Fall, dass a = 1 bis 20 ist, ist bevorzugt b = 4 bis 20 und c = 10 bis 24.

Für den Fall, dass a = 0 ist, ist bevorzugt b = 4 bis 20 und c = 10 bis 24.

Bevorzugt sind solche Zusammensetzungen, in denen der Anteil der Verbindungen nach Formel (I) 0,02 bis 1,0 Gew.-%, insbesondere 0,05 bis 0,5 Gew.-%, beträgt.

Bevorzugt sind weiterhin solche Zusammensetzungen, in denen zusätzlich 0,01 bis 0,5 Gew.-% Ester oder Teilester, bevorzugt Fettsäureester oder Fettsäureteilester, von 4- bis 6-wertigen Alkoholen enthalten sind.

Bevorzugt sind weiterhin solche Zusammensetzungen, in denen zusätzlich 0,1 bis 15 Gew.-% UV-Absorber enthalten sind. Dabei werden die UV-Absorber bevorzugt ausgewählt aus der Gruppe bestehend aus (Bis[2-hydroxy-5-tert-octyl-2-(benzotriazol-2-yl)phenyl]methan), 2-(4,6-Diphenyl-1,3,5-triazin-2-yl)-5-(hexyl)oxy-Phenol und 2-Cyano-3,3-diphenyl-propensäure-2,2-bis[[2-cyano-1-oxo-3,3-diphenyl-2-propenyl)oxy]methyl]-1,3-propanediylester.

Bevorzugt sind weiterhin solche Zusammensetzungen, die zusätzlich 10 bis 3 000 ppm Thermostabilisatoren, bezogen auf die Gesamtmenge der Zusammensetzung enthalten. Dabei ist der Thermostabilisator bevorzugt ausgewählt aus der Gruppe bestehend aus Tris-(2,4-di-tert.-butylphenyl)phosphit und Triphenylphosphin.

Die erfindungsgemäße Aufgabe wird weiterhin gelöst durch Verwendung gemäß dem Anspruch 8.

Die erfindungsgemäße Aufgabe wird weiterhin gelöst durch die Verwendung der erfindungsgemäßen Zusammensetzungen zur Herstellung von Erzeugnissen enthaltend diese Zusammensetzungen.

Weiterhin wird die erfindungsgemäße Aufgabe gelöst durch Erzeugnisse enthaltend die erfindungsgemäßen Zusammensetzungen. Diese Erzeugnisse sind bevorzugt Platten, Bedachungen oder Verscheibungen.

Die erfindungsgemäßen Erzeugnisse und die erfindungsgemäßen mehrschichtigen Erzeugnisse sind bevorzugt massive Platten oder gewellte Platten. Sowohl die massiven als auch die gewellten Platten haben bevorzugt auf einer oder auf beiden Außenseiten eine Schicht aus den erfindungsgemäßen Zusammensetzungen.

Die erfindungsgemäßen Erzeugnisse oder mehrschichtigen Erzeugnisse sind bevorzugt Stegplatten oder Stegprofile, beispielsweise nach dem Nut-Feder-System. Auch diese bevorzugten Erzeugnisse oder mehrschichtigen Erzeugnisse haben bevorzugt auf einer oder beiden Außenseiten eine Außenschicht aus den erfindungsgemäßen Zusammensetzungen.

In den erfindungsgemäßen Zusammensetzungen ist der Anteil der Verbindungen nach Formel (I) bevorzugt 0,02 bis 1,0 Gew.-%, besonders bevorzugt 0,05 bis 0,5 Gew.-%, ganz besonders bevorzugt 0,1 bis 0,4 Gew.-%.

Erfindungsgemäß bevorzugte Verbindungen der allgemeinen Formel (I), bei denen a = 1 bis 20, b = 1 bis 25 und c = 10 bis 40 ist, sind solche, bei denen a = 1 bis 10, b = 4 bis 20 und c = 10 bis 24 ist.

Erfindungsgemäß bevorzugte Verbindungen der allgemeinen Formel (I), bei denen a = 0, b = 1 bis 25 und c

= 10 bis 40 ist, sind solche, bei denen a = 0, b = 4 bis 20 und c = 10 bis 24 ist.

Die erfindungsgemäßen Zusammensetzungen enthalten bevorzugt zusätzlich 0,1 bis 15 Gew.-Teile, bevorzugt 3 bis 8 Gew.-Teile UV-Absorber.

Die erfindungsgemäßen Zusammensetzungen enthalten bevorzugt 80 bis 99,8 Gew.-% Polycarbonat.

Die erfindungsgemäßen Zusammensetzungen enthalten bevorzugt Bisphenol A Homopolycarbonat als Polycarbonat.

Die erfindungsgemäßen Zusammensetzungen können zusätzlich weitere übliche Verarbeitungshilfsmittel, insbesondere Entformungsmittel und Fließmittel sowie weitere übliche Stabilisatoren, insbesondere Thermostabilisatoren enthalten.

Ferner können die erfindungsgemäßen Zusammensetzungen und die daraus hergestellten Erzeugnisse organische Farbstoffe, anorganische Farbpigmente, Fluoreszenzfarbstoffe und besonders bevorzugt optische Aufheller enthalten.

Verbindungen der allgemeinen Formel (I) sind kommerziell erhältlich. Sie werden üblicherweise im Bereich der Kosmetika eingesetzt. Sie können beispielsweise unter dem Handelsnamen Cetiol G 20 S von der Firma Cognis (Deutschland, Düsseldorf) bezogen werden.

Verbindungen der allgemeinen Formel (I) können durch übliche dem Fachmann bekannte Verfahren hergestellt werden. Die Verbindungen der allgemeinen Formel (I) sind Ester aus linearen Carbonsäuren und in β-Position verzweigten Alkoholen. Diese Ester können beispielsweise durch Veresterung der Carbonsäuren und der Alkohole nach bekannten Verfahren hergestellt werden. Die verzweigten Alkohole können als Guerbetalkohole bezeichnet werden. Guerbetalkohole sind die Produkte der Guerbet-Reaktion und können beispielsweise durch die Guerbet-Reaktion hergestellt werden. Als Guerbet-Reaktion wird die Selbstkondensation von Alkoholen unter dem Einfluss von Natrium oder Kupfer bei ca. 200°C und erhöhtem Druck bezeichnet.

Die erfindungsgemäßen Zusammensetzungen haben zahlreiche Vorteile. Sie lassen sich problemlos verarbeiten und zeigen in den als Produkt erhaltenen Erzeugnissen, beispielsweise Platten, keine Beeinträchtigungen. Überraschenderweise hat sich herausgestellt, dass bei Einsatz der Verbindungen gemäß Formel (I) auch als flüchtig bekannte weitere Zusatzstoffe nicht mehr zu den anfangs beschriebenen Problemen bei ihrer Verwendung in Zusammensetzungen, die Polycarbonat enthalten, führen.

Erfindungsgemäße Polycarbonate sind Homopolycarbonate, Copolycarbonate und thermoplastische Polyestercarbonate. Sie haben bevorzugt mittlere Molekülargewichte $\overline{M}_w$ von 18.000 bis 40.000 g/mol, vorzugsweise von 26.000 bis 36.000 g/mol und insbesondere von 28.000 bis 35.000 g/mol, ermittelt durch Messung der rel. Lösungsviskosität in Dichlormethan oder in Mischungen gleicher Gewichtsmengen Phenol/o-Dichlorbenzol geeicht durch Lichtstreuung.

Die Schmelzeviskosität der Coextrusionsschichten soll vorzugsweise kleiner sein sollte als die des Substrates, auf die sie aufgebracht werden, wenn mehrschichtige Erzeugnisse hergestellt werden.

Zur Herstellung von Polycarbonaten sei beispielhaft auf "Schnell", Chemistry and Physics of Polycarbonats, Polymer Reviews, Vol. 9, Interscience Publishers, New York, London, Sydney 1964, auf D.C. PREVORSEK, B.T. DEBONA and Y. KESTEN, Corporate Research Center, Allied Chemical Corporation, Moristown, New Jersey 07960, "Synthesis of Poly(ester)carbonate Copolymers" in Journal of Polymer Science, Polymer Chemistry Edition, Vol. 19, 75-90 (1980), auf D. Freitag, U. Grigo, P.R. Müller, N. Nouvertne, BAYER AG, "Polycarbonates" in Encyclopedia of Polymer Science and Engineering, Vol. 11, Second Edition, 1988, Seiten 648-718 und schließlich auf Dres. U. Grigo, K. Kircher und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen. Die Herstellung erfolgt vorzugsweise nach dem Phasengrenzflächenverfahren oder dem Schmelze-Umesterungsverfahren und wird im Folgenden beispielhaft an dem Phasengrenzflächenverfahren beschrieben.

Als Ausgangsverbindungen bevorzugt einzusetzende Verbindungen sind Bisphenole der allgemeinen Formel HO-Z-OH, worin Z ein divalenter organischer Rest mit 6 bis 30 Kohlenstoffatomen ist, der eine oder mehrere aromatische Gruppen enthält.

Beispiele solcher Verbindungen sind Bisphenole, die zu der Gruppe der Dihydroxydiphenyle, Bis(hydroxyphenyl)alkane, Indanbisphenole, Bis(hydroxyphenyl)ether, Bis(hydroxyphenyl)sulfone, Bis(hydroxyphenyl)ketone und α,α'-Bis(hydroxyphenyl)- diisopropylbenzole gehören.

Besonders bevorzugte Bisphenole, die zu den vorgenannten Verbindungsgruppen gehören, sind Bisphenol-A, Tetraalkylbisphenol-A, 4,4-(meta-Phenylendiisopropyl) diphenol (Bisphenol M), 4,4-(para-Phenylendiisopropyl) diphenol, 1,1-Bis-(4-hydroxyphenyl)-3,3,5-trimethylcyclohexan (BP-TMC) sowie gegebenenfalls deren Gemische.

Besonders bevorzugt sind Homopolycarbonate auf Basis Bisphenol-A und Copolycarbonate auf der Basis der Monomere Bisphenol-A und 1,1-Bis-(4-hydroxyphenyl)-3,3,5-trimethylcyclohexan. Die erfindungsgemäß einzusetzenden Bisphenolverbindungen werden mit Kohlensäureverbindungen, insbesondere Phosgen oder beim Schmelzeumesterungsprozess Diphenylcarbonat bzw. Dimethylcarbonat, umgesetzt.

Polyestercarbonate werden durch Umsetzung der bereits genannten Bisphenole, mindestens einer aromatischen Dicarbonsäure und gegebenenfalls Kohlensäureäquivalente erhalten. Geeignete aromatische Dicarbonsäuren sind beispielsweise Phthalsäure, Terephthalsüure, Isophthalsäure, 3,3'- oder 4,4'-Diphenyldicarbonsäure und Benzophenondicarbonsäuren. Ein Teil, bis zu 80 Mol%, vorzugsweise von 20 bis 50 Mol% der Carbonatgruppen in den Polycarbonaten können durch aromatische Dicarbonsäureester-Gruppen ersetzt sein.

Beim Phasengrenzflächenverfahren verwendete inerte organische Lösungsmittel sind beispielsweise Dichlormethan, die verschiedenen Dichlorethane und Chlorpropanverbindungen, Tetrachlormethan, Trichlormethan, Chlorbenzol und Chlortoluol, vorzugsweise werden Chlorbenzol oder Dichlormethan bzw. Gemische aus Dichlormethan und Chlorbenzol eingesetzt.

Die Phasengrenzflächenreaktion kann durch Katalysatoren wie tertiäre Amine, insbesondere N-Alkylpiperidine oder Oniumsalze beschleunigt werden. Bevorzugt werden Tributylamin, Triethylamin und N-Ethylpiperidin verwendet. Im Falle des Schmelzeumesterungsprozesses werden bevorzugt die in DE-A 4238123 genannten Katalysatoren verwendet.

Die Polycarbonate können durch den Einsatz geringer Mengen Verzweiger bewusst und kontrolliert verzweigt werden. Einige geeignete Verzweiger sind: Phloroglucin, 4,6-Dimethyl-2,4,6-tri-(4-hydroxyphenyl)-hepten-2; 4,6-Dimethyl-2,4,6-tri-(4-hydroxyphenyl)-heptan; 1,3,5-Tri-(4-hydroxyphenyl)-benzol; 1,1,1-Tri-(4-hydroxyphenyl)-ethan; Tri-(4-hydroxyphenyl)-phenylmethan; 2,2-Bis-[4,4-bis-(4-hydroxyphenyl)-cyclohexyl]-propan; 2,4-Bis-(4-hydroxyphenyl-isopropyl)-phenol; 2,6-Bis-(2-hydroxy-5'-methyl-benzyl)-4-methylphenol; 2-(4-Hydroxyphenyl)-2-(2,4-dihydroxyphenyl)-propan; Hexa-(4-(4-hydroxyphenyl-isopropyl)-phenyl)-orthoterephthalsäureester; Tetra-(4-hydroxyphenyl)-methan; Tetra-(4-(4-hydroxyphenylisopropyl)-phenoxy)-methan; $\alpha,\alpha'\alpha''$-Tris-(4-hydroxyphenyl)-1,3,5-triisopropylbenzol; 2,4-Dihydroxybenzoesäure; Trimesinsäure; Cyanurchlorid; 3,3-Bis-(3-methyl-4-hydroxyphenyl)-2-oxo-2,3-dihydroindol; 1,4-Bis-(4',4"-dihydroxytriphenyl)-methyl)-benzol und insbesondere: 1,1,1-Tri-(4-hydroxyphenyl)-ethan und Bis-(3-methyl-4-hydroxyphenyl)-2-oxo-2,3-dihydroindol.

Die gegebenenfalls mitzuverwendenden 0,05 bis 2 mol%, bezogen auf eingesetzte Diphenole, an Verzweigern bzw. Mischungen der Verzweigern, können mit den Diphenolen zusammen eingesetzt werden aber auch in einem späteren Stadium der Synthese zugegeben werden.

Es können Kettenabbrecher verwendet werden. Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet in Mengen von 1-20 Mol% bevorzugt 2-10 Mol% je Mol Bisphenol. Bevorzugt sind Phenol, 4-tert.-Butylphenol bzw. Cumylphenol.

Kettenabbrecher und Verzweiger können getrennt oder aber auch zusammen mit dem Bisphenol den Synthesen zugesetzt werden.

Die Herstellung der Polycarbonate nach dem Schmelzeumesterungsprozess ist in DE-A 4 238 123 beispielhaft beschrieben.

Geeignete UV-Absorber für die erfindungsgemäßen Zusammensetzungen sind bevorzugt solche Verbindungen, die aufgrund ihres Absorptionsvermögens unterhalb 400 nm in der Lage sind, Polycarbonat wirksam vor UV-Licht zu schützen und ein Molekulargewicht von mehr als 370, vorzugsweise von 500 und mehr, aufweisen.

Geeignete UV-Absorber sind insbesondere die in der WO 99/05205 beschriebenen Verbindungen der Formel (II)

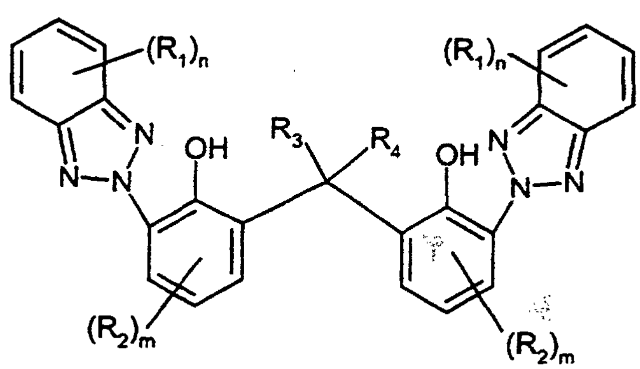

(II)

worin

R¹ und R² gleich oder verschieden sind und H, Halogen, $C_1$-$C_{10}$-Alkyl, $C_5$-$C_{10}$-Cycloalkyl, $C_7$-$C_{13}$-Aralkyl, $C_6$-$C_{14}$-Aryl, -$OR^5$ oder -(CO)-O-$R^5$ bedeuten mit $R^5$ = H oder $C_1$-$C_4$-Alkyl,

$R^3$ und $R^4$ ebenfalls gleich oder verschieden sind und H, $C_1$-$C_4$-Alkyl, $C_5$-$C_6$-Cycloalkyl, Benzyl oder $C_6$-$C_{14}$-Aryl bedeuten,

m 1,2 oder 3 ist und n 1,2,3 oder 4 ist,

sowie solche der Formel (III)

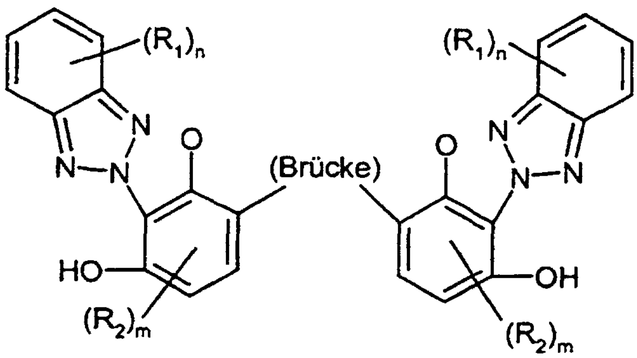

(III)

worin die Brücke

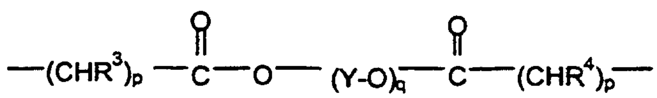

bedeutet,
$R^1$, $R^2$, m und n die für Formel (II) genannte Bedeutung haben,
worin außerdem p eine ganze Zahl von 0 bis 3 ist,
q eine ganze Zahl von 1 bis 10 ist,
Y $-CH_2-CH_2-$, $-(CH_2)_3-$, $-(CH_2)_4-$, $-(CH_2)_5-$, $-(CH_2)_6-$, oder $CH(CH_3)-CH_2-$ ist und
$R^3$ und $R^4$ die für Formel (II) genannte Bedeutung haben.

Weitere geeignete UV-Absorber sind solche, die substituierte Triazine darstellen, wie das 2,4-Bis(2,4-dimethylphenyl)-6-(2-hydroxy-4-n-octyloxyphenyl)-1,3,5-triazin (CYASORB® UV-1164) oder 2-(4,6-Diphenyl-1,3,5-triazin-2-yl)-5-(hexyl)oxy-Phenol (Tinuvin® 1577). Besonders bevorzugt als UV-Absorber ist 2,2-Methylenbis-(4-(1,1,3,3-tetramethylbutyl)-6-(2H-benztriazol-2-yl)phenol), das im Handel unter der Bezeichnung Tinuvin® 360 oder Adeka Stab® LA 31 vertrieben wird. Geeignet ist außerdem der nach der WO 96/15102, Beispiel 1 erhaltene UV-Absorber Uvinul® 3030 der BASF AG. Geeignet sind außerdem die in EP-A 0 500 496 und US-A 5 959 012 genannten UV-Absorber.

Die Einarbeitung der UV-Absorber in die erfindungsgemäßen Zusammensetzungen erfolgt nach üblichen Methoden, beispielsweise durch Vermischen von Lösungen der UV-Absorber mit Lösungen der Kunststoffe in geeigneten organischen Lösungsmitteln wie $CH_2Cl_2$, Halogenalkanen, Halogenaromaten, Chlorbenzol und Xylolen. Die Substanzgemische werden dann bevorzugt in bekannter Weise via Extrusion homogenisiert; die Lösungsgemische werden bevorzugt in bekannter Weise durch Ausdampfen des Lösungsmittels und anschließender Extrusion entfernt, beispielsweise compoundiert.

Geeignete Stabilisatoren für die Polycarbonate für die erfindungsgemäßen Zusammensetzungen sind beispielsweise Phosphine, Phosphite oder Silicium enthaltende Stabilisatoren und weitere in der EP-A 0 500 496 beschriebene Verbindungen. Beispielhaft seien Triphenylphosphite, Diphenylalkylphosphite, Phenyldialkylphosphite, Tris-(nonylphenyl)phosphit, Tetrakis-(2,4-di-tert.-butylphenyl)-4,4'-biphenylendiphosphonit und Triarylphosphit genannt. Besonders bevorzugt sind Triphenylphosphin und Tris-(2,4-di-tert.-butylphenyl)phosphit.

Ferner können die erfindungsgemäßen Zusammensetzungen 0,01 bis 0,5 Gew.-% der (Teil)Ester von vier- bis sechswertigen Alkoholen, insbesondere des Pentaerythrits enthalten.

Vierwertige Alkohole sind beispielsweise Pentaerythrit und Mesoerythrit.
Fünfwertige Alkohole sind beispielsweise Arabit, Ribit und Xylit.
Sechswertige Alkohole sind beispielsweise Mannit, Glucit (Sorbit) und Dulcit.

Die Ester sind bevorzugt die Monoester, Diester, Triester , Tetraester ggf. Pentaester und Hexaester oder deren Mischungen, insbesondere statistische Mischungen, aus gesättigten, aliphatischen $C_{10}$ bis $C_{26}$-Monocarbonsäuren, vorzugsweise mit gesättigten, aliphatischen $C_{14}$ bis $C_{22}$-Monocarbonsäuren.

Die kommerziell erhältlichen Fettsäureester, insbesondere des Pentaerythrits, können herstellungsbedingt bis zu 60 % unterschiedlicher Teilester enthalten.

Gesättigte, aliphatische Monocarbonsäuren mit 10 bis 26 C-Atomen sind beispielsweise Caprinsäure, Laurinsäure, Myristinsäure, Palmitinsäure, Stearinsäure, Arachinsäure, Behensäure, Lignocerinsäure und Cerotinsäure.

Bevorzugte gesättigte, aliphatische Monocarbonsäuren mit 14 bis 22 C-Atomen sind beispielsweise Myristinsäure, Palmitinsäure, Stearinsäure, Arachinsäure und Behensäure.

Besonders bevorzugt sind gesättigte, aliphatische Monocarbonsäuren wie Palmitinsäure und Stearinsäure.

Die gesättigten, aliphatischen $C_{10}$ bis $C_{26}$-Carbonsäuren und die erfindungsgemäßen Fettsäureester sind als solche entweder literaturbekannt oder nach literaturbekannten Verfahren herstellbar. Beispiele für Pentaerythritfettsäureester sind die der besonders bevorzugten, vorstehend genannten Monocarbonsäuren.

Besonders bevorzugt sind Ester des Pentaerythrits mit Stearinsäure und Palmitinsäure.

Beispiele für Antistatika sind kationaktive Verbindungen, beispielsweise quartäre Ammonium-, Phosphonium- oder Sulfoniumsalze, anionaktive Verbindungen, beispielsweise Alkylsulfonate, Alkylsulfate, Alkylphosphate, Carboxylate in Form von Alkali- oder Erdalkalimetallsalzen, nichtionogene Verbindungen, beispielsweise Polyethylenglykolester, Polyethylenglykolether, Fettsäureester, ethoxylierte Fettamine. Bevorzugte Antistatika sind nichtionogene Verbindungen.

Alle für die Synthese der erfindungsgemäßen Coextrusionsmassen verwandten Einsatzstoffe und Lösungsmittel können aus ihrer Herstellung und Lagerung mit entsprechenden Verunreinigungen kontaminiert sein, wobei es das Ziel ist, mit so sauberen Ausgangsstoffen wie möglich zu arbeiten.

Das Vermischen der einzelnen Bestandteile kann in bekannter Weise sowohl sukzessive als auch simultan erfolgen und zwar sowohl bei Raumtemperatur als auch bei erhöhter Temperatur.

Die Einarbeitung der Zusätze in die erfindungsgemäßen Zusammensetzungen erfolgt bevorzugt in bekannter Weise durch Vermischen von Polymergranulat mit den Zusätzen bei Temperaturen von etwa 200 bis 400°C in üblichen Aggregaten wie Innenknetern, Einschneckenextrudern und Doppelwellenextrudern beispielsweise durch Schmelzecompoundierung oder Schmelzeextrusion oder durch Vermischen der Lösungen des Polymers mit Lösungen der Additive und anschließende Verdampfung der Lösungsmittel in bekannter Weise. Der Anteil der Additive in der Formmasse kann in weiten Grenzen variiert werden und richtet sich nach den gewünschten Eigenschaften der Zusammensetzungen. Der Gesamtanteil der Additive in den Zusammensetzungen beträgt bevorzugt etwa bis zu 20 Gew.%, vorzugsweise 0,2 bis 12 Gew.-%, bezogen auf das Gewicht der Zusammensetzung.

Wie die erfindungsgemäßen Beispiele belegen, bietet die Verwendung der erfindungsgemäßen Zusammensetzungen einen signifikanten Vorteil auf beliebigen Polycarbonat-Fonnmassen als Basismaterial. Dabei kann auch das Plattenbasismaterial mit dem Entformungsmittel der erfindungsgemäßen Zusammensetzung ausgerüstet sein.

Gegenstand der Erfindung sind daher ferner Formkörper, die unter Mitverwendung der erfindungsgemäßen Zusammensetzungen hergestellt worden sind. Die Zusammensetzungen können zur Erzeugung von massiven Kunststoffplatten und Stegplatten (z.B. Stegdoppelplatten) eingesetzt werden. Die Platten umfassen also auch solche, die auf einer Seite oder beiden Seiten eine zusätzliche Deckschicht mit der erfindungsgemäßen Zusammensetzungen mit einem erhöhten UV-Absorbergehalt aufweisen.

Die erfindungsgemäßen Zusammensetzungen erlauben die erleichterte Herstellung von Erzeugnissen, insbesondere von Platten und aus ihnen hergestellte Erzeugnisse wie z.B. Verscheibungen für Gewächshäuser, Wintergärten, Bushaltestellen, Reklametafeln, Schilder, Schutzscheiben, Automobilverscheibungen, Fenster und Überdachungen.

Nachträgliche Bearbeitungen der mit den erfindungsgemäßen Zusammensetzungen beschichteten Erzeugnisse, wie z.B. Tiefziehen oder Oberflächenbearbeitungen, wie z.B. Ausrüstung mit Kratzfestlacken, wasserspreitenden Schichten und ähnliches sind möglich und die durch diese Verfahren hergestellten Erzeugnisse ebenfalls Gegenstand der vorliegenden Erfindung.

Die Coextrusion als solche ist literaturbekannt (siehe beispielsweise EP-A 0 110 221 und EP-A 0 110 238).

Im vorliegenden Fall wird vorzugsweise wie folgt verfahren:

An einem Coextrusionsadapter sind Extruder zur Erzeugung der Kernschicht und Deckschicht(en) angeschlossen. Der Adapter ist so konstruiert, dass die die Deckschicht(en) formende Schmelze als dünne Schicht haftend auf die Schmelze der Kernschicht aufgebracht werden.

Der so erzeugte, mehrschichtige Schmelzestrang wird dann in der anschließend angeschlossenen Düse in die gewünschte Form (Steg- oder Massivplatte) gebracht. Anschließend wird in bekannter Weise mittels Kalandrierung (Massivplatte) oder Vakuumkalibrierung (Stegplatte) die Schmelze unter kontrollierten Bedingungen abgekühlt und anschließend abgelängt. Gegebenenfalls kann nach der Kalibrierung ein Temperofen zur Eliminierung von Spannungen angebracht werden. Anstelle des vor der Düse angebrachten Adapters kann auch die Düse selbst so ausgelegt

sein, dass dort die Zusammenführung der Schmelzen erfolgt.

Die Erfindung wird durch das folgende Beispiel erläutert.

## Beispiel

10 mm Stegdoppelplatten A bis F, wie sie beispielweise in der EPA 0 110 238 beschrieben sind, wurden aus folgenden Zusammensetzungen erhalten: Als Basismaterial wurde Makrolon® KU 1-1243 (verzweigtes Bisphenol-A Polycarbonat der Bayer AG, Leverkusen, Deutschland mit einem Schmelzflußindex (MFR) von 6,5 g/10 min bei 300°C und 1,2 kg Belastung) verwendet. Coextrudiert wurde dieses mit den in der Tabelle angegebenen Compounds auf Basis Makrolon® 3100 (lineares Bisphenol-A Polycarbonat der Bayer AG, Leverkusen, Deutschland mit einem Schmelzflußindex (MFR) von 6,5 g/10 min bei 300°C und 1,2 kg Belastung).

Die Dicke der Coextrusionsschicht betrug jeweils etwa 50 µm.

| Platte | UV-Absorber | Entformungsmittel |
|---|---|---|
| A | 5 Gew.-% Tinuvin 360 | 0,2 Gew.-% gemäß Erfindung*) |
| B | 5 Gew.-% Tinuvin 360 | 0,3 Gew.-% gemäß Erfindung*) + 0.1 Gew.-% PETS**) |
| C | 5 Gew.-% Tinuvin 360 | 0,1 Gew.-% gemäß Erfindung*) + 0.1 Gew.-% PETS**) |
| D | 5 Gew.-% Tinuvin 360 | 0.2 Gew.-% 2-Octyldodecyl-12-stearoylstearat****) |
| E | 5 Gew.-% Tinuvin 360 | 0.25 Gew.-% PETS**) |
| F | 5 Gew.-% Tinuvin 360 | 0.1 Gew.-% PETS**) + 0.05 Gew.-% GMS*** |

*) Im Handel erhältlich, Cetiol® G 20 S der Firma Cognis, Düsseldorf, Deutschland

**) Im Handel erhältlich, Loxiol® VPG 861 der Firma Cognis, Düsseldorf, Deutschland

***) Im Handel erhältlich, Loxiol® EP 129 der Firma Cognis, Düsseldorf, Deutschland

****) Im Handel erhältlich, Ceraphyl® 847 der Firma ISP, 1361 Alys Road, Wayne, NJ 07470 USA PETS = Pentaerythrittetrastearat GMS = Glycerinmonostearat

Die verwendeten Maschinen und Apparate zur Herstellung von mehrschichtigen Stegplatten werden im Folgenden beschrieben:

Die Einrichtung bestand aus

- dem Hauptextruder mit einer Schnecke der Länge 33 D und einem Durchmesser von 70 mm mit Entgasung
- dem Coexadapter (Feedblocksystem)
- einem Coextruder zum Aufbringen der Deckschicht mit einer Schnecke der Länge 25 D und einem Durchmesser von 30 mm
- der speziellen Breitschlitzdüse mit 350 mm Breite
- dem Kalibrator
- der Rollenbahn
- der Abzugseinrichtung
- der Ablängvorrichtung (Säge)
- dem Ablagetisch.

Das Polycarbonat-Granulat des Basismaterials wurde dem Fülltrichter des Hauptextruders zugeführt, das UV-Coextrusionsmaterial dem des Coextruders. Im jeweiligen Plastifiziersystem Zylinder/Schnecke erfolgt das Aufschmelzen und Fördern des jeweiligen Materials. Beide Materialschmelzen wurden im Coexadapter zusammengeführt und bildeten nach Verlassen der Düse und Abkühlen im Kalibrator einen Verbund. Die weiteren Einrichtungen dienten dem Transport, Ablängen und Ablegen der extrudierten Platten.

## Coextrusion mit D (Referenz):

- erste kleinere Ablagerungen nach 4 Stunden
- nach 90 Minuten in unregelmäßigen Abständen auftretende, leichte Querwellen, die die Plattenqualität leicht negativ beeinträchtigen. Nach 4 ½ Stunden etwas stärkere Querwellen.
- Note: gut

**Coextrusion mit E (Referenz):**

- erste kleinere Störungen nach 50 Minuten (Querwellen, kleine, weiße Bläschen)
- nach 90 Minuten größere Störungen (Verwerfungen von Stegen, weiße Ablagerungen, Querwellen)
- Note: schlecht

**Coextrusion mit F (Referenz):**

- erste kleinere Störungen nach 90 Minuten (kleine, weiße Bläschen)
- nach 100 Minuten größere Störungen (Verwerfungen von Stegen, weiße Ablagerungen)
- Note: befriedigend bis schlecht

**Coextrusion mit A:**

- keine Ablagerungen über eine Versuchsdauer von 5 Stunden
- nach 90 Minuten in unregelmäßigen Abständen auftretende, leichte Querwellen, die die Plattenqualität leicht negativ beeinträchtigen
- Note: sehr gut

**Coextrusion mit B:**

- keine Ablagerungen über eine Versuchsdauer von 5 Stunden
- nach 90 Minuten in unregelmäßigen Abständen auftretende, leichte Querwellen, die die Plattenqualität leicht negativ beeinträchtigen
- Note: sehr gut

**Coextrusion mit C:**

- keine Ablagerungen über eine Versuchsdauer von 5 Stunden
- nach 90 Minuten in unregelmäßigen Abständen auftretende, leichte Querwellen, die die Plattenqualität leicht negativ beeinträchtigen
- Note: sehr gut

## Patentansprüche

1. Zusammensetzungen, enthaltend
Polycarbonat und
eine oder mehrere verschiedene Verbindungen der allgemeinen Formel (I)

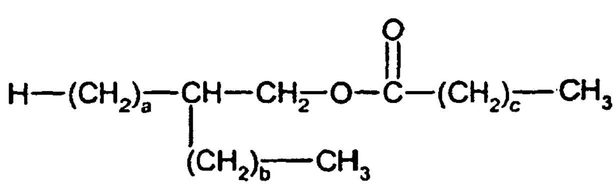

(I),

wobei

a gleich 1 bis 20,

b gleich 1 bis 25 und

c gleich 10 bis 40 ist,

und zusätzlich eine oder mehrere verschiedene Verbindungen der allgemeinen Formel (I) wobei

a gleich 0,

b gleich 1 bis 25 und

c 10 bis 40 ist.

**2.** Zusammensetzungen nach Anspruch 1, wobei der Anteil der Verbindungen nach Formel (I) 0,02 bis 1,0 Gew.-% beträgt.

**3.** Zusammensetzungen nach Anspruch 1 oder 2, wobei die Zusammensetzungen zusätzlich 0,01 bis 0,5 Gew.-% Ester oder Teilester von vier- bis sechswertigen Alkoholen enthalten.

**4.** Zusammensetzungen nach einem der Ansprüche 1 bis 3, wobei die Zusammensetzungen zusätzlich 0,1 bis 15 Gew.-% UV-Absorber enthalten.

**5.** Zusammensetzungen nach Anspruch 4, wobei der UV-Absorber ausgewählt ist aus der Gruppe bestehend aus (Bis[2-hydroxy-5-tert-octyl-2-(benzotriazol-2-yl)phenyl]methan), 2-(4,6-Diphenyl-1,3,5-triazin-2-yl)-5-(hexyl)oxy-Phenol und 2-Cyano-3,3-diphenyl-propensäure-2,2-bis[[2-cyano-1-oxo-3,3-diphenyl-2-propenyl)oxy]methyl]-1,3-propanediylester.

**6.** Zusammensetzungen nach einem der Ansprüche 1 bis 5, wobei die Zusammensetzungen zusätzlich 10 bis 3000 ppm Thermostabilisatoren, bezogen auf die Gesamtmenge der Zusamensetzung, enthalten.

**7.** Zusammensetzungen nach Anspruch 6, wobei der Thermostabilisator ausgewählt ist aus der Gruppe bestehend aus Tris-(2,4-di-tert.-butylphenyl)phosphit und Triphenylphoshphin.

**8.** Verwendung von Mischungen aus einer oder mehrerer Verbindungen der allgemeinen Formel (I)

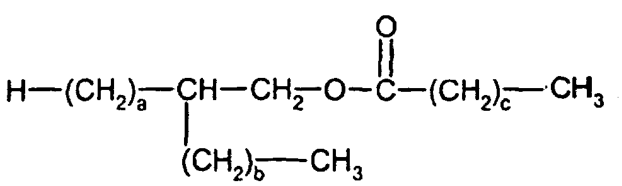

(I),

wobei

a gleich 1 - 20,

b gleich 1 bis 25 und

c 10 bis 40 ist,

und zusätzlich eine oder mehrere verschiedene Verbindungen der allgemeinen Formel (I) wobei

a gleich 0,

b gleich 1 bis 25 und

c 10 bis 40 ist.

zur Herstellung von Zusammensetzungen enthaltend Polycarbonat.

**9.** Verwendung der Zusammensetzungen gemäß einem der Ansprüche 1 bis 7 zur Herstellung von Erzeugnissen enthaltend diese Zusammensetzungen.

**10.** Erzeugnisse enthaltend Zusammensetzungen gemäß einem der Ansprüche 1 bis 7.

**11.** Platten, Bedachungen oder Verscheibungen enthaltend Zusammensetzungen gemäß einem der Ansprüche 1 bis 7.

## Claims

**1.** Compositions containing
polycarbonate and
one or more different compounds with the general formula (I)

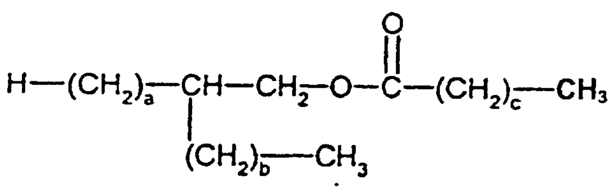

(I),

wherein

a equals 1 to 20
b equals 1 to 25 and
c equals 10 to 40,

and additionally contain one or more different compounds with the general formula (I)
wherein

a equals 0
b equals 1 to 25 and
c is 10 to 40.

**2.** Compositions according to claim 1, wherein the proportion of compounds according to formula (I) is 0.02 to 1.0 wt.%.

**3.** Compositions_according to claim 1 or 2, wherein the compositions additionally contain 0.01 to 0.5 wt.% of esters or partial esters of tetrahydric to hexahydric alcohols.

**4.** Compositions according to any one of claims 1 to 3, wherein the compositions additionally contain 0.1 to 15 wt.% of UV absorbers.

**5.** Compositions according to claim 4, wherein the UV absorber is chosen from the group consisting of (bis[2-hydroxy-5-tert-octyl-2-(benzotriazol-2-yl) phenyl] methane), 2-(4,6-diphenyl-1,3,5-triazin-2-yl)-5-(hexyl) oxyphenol and 2-cyano-3,3-diphenyl propenoic acid-2,2-bis[[2-cyano-1-oxo-3,3-diphenyl-2-propenyl)oxy]methyl]-1,3-propanediyl ester.

6. Compositions according to any one of claims 1 to 5, wherein the compositions additionally contain 10 to 3000 ppm of heat stabilisers, relative to the total quantity of the composition.

7. Compositions according to claim 6, wherein the heat stabiliser is chosen from the group consisting of tris-(2,4-di-tert-butylphenyl) phosphite and triphenyl phosphine.

8. Use of mixtures of one or more compounds with the general formula (I)

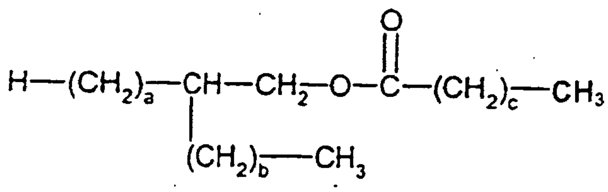

(I),

wherein

a equals 1 to 20
b equals 1 to 25 and
c is 10 to 40,

and additionally one or more different compounds with the general formula (I)
wherein

a equals 0
b equals 1 to 25 and
c is 10 to 40.

in the manufacture of compositions containing polycarbonate.

9. Use of the compositions according to any one of claims 1 to 7 in the manufacture of products containing these compositions.

10. Products containing compositions according to any one of claims 1 to 7.

11. Sheets, roofs or glazing systems containing compositions according to any one of claims 1 to 7.

## Revendications

1. Compositions contenant
un polycarbonate et
un ou plusieurs composés variés de formule générale (I)

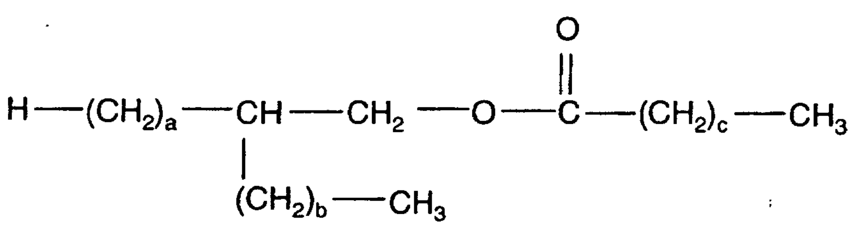

(I),

dans laquelle

a est un nombre allant de 1 à 20,

b est un nombre allant de 1 à 25 et
c est un nombre allant de 10 à 40,

et en outre un ou plusieurs composés variés de formule générale (I), dans laquelle

a est égal à 0,
b est un nombre allant de 1 à 25 et
c est un nombre allant de 10 à 40.

**2.** Compositions selon la revendication 1, dans lesquelles la proportion des composés de formule (I) est de 0,02 à 1,0 % en poids.

**3.** Compositions selon la revendication 1 ou 2 contenant en outre 0,01 à 0,5 % en poids d'esters ou d'esters partiels d'alcools tétravalents à hexavalents.

**4.** Compositions selon l'une des revendications 1 à 3 contenant en outre 0,01 à 15 % en poids d'absorbeurs d'UV.

**5.** Compositions selon la revendication 4, dans lesquelles l'absorbeur d'UV est choisi dans le groupe consistant en le (bis[2-hydroxy-5-tert-octyl-2-(benzotriazol-2-yl)phényl]méthane), le 2-(4,6-diphényl-1,3,5-triazin-2-yl)-5-(hexyl) oxy-phénol et le 2-cyano-3,3-diphényl-propénoate de 2,2-bis[[(2-cyano-1-oxo-3,3-diphényl-2-propényl)oxy]-méthyl]-1,3-propanediyle.

**6.** Compositions selon l'une des revendications 1 à 5 contenant en outre de 10 à 3000 ppm de thermostabilisants sur leur poids total.

**7.** Compositions selon la revendication 6, dans lesquelles le thermostabilisant est choisi dans le groupe consistant en le phosphite de tris-(2,4-di-tert.-butylphényle) et la triphénylphosphine.

**8.** Utilisation de mélanges d'un ou plusieurs composés de formule générale (I)

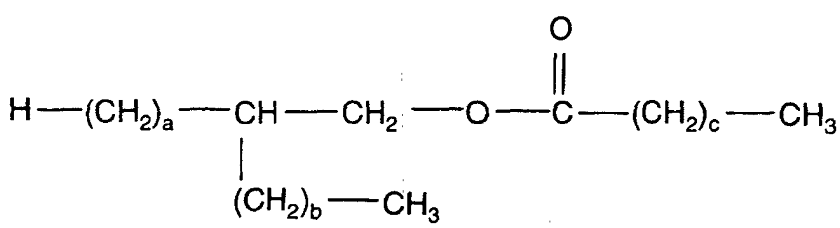

(I),

dans laquelle

a est un nombre allant de 1 à 20,
b est un nombre allant de 1 à 25 et
c est un nombre allant de 10 à 40,

et en outre un ou plusieurs composés variés de formule générale (I), dans laquelle

a est égal à 0,
b est un nombre allant de 1 à 25 et
c un nombre allant de 10 à 40,

pour la préparation de compositions contenant un polycarbonate.

**9.** Utilisation des compositions selon l'une des revendications 1 à 7 pour la préparation de produits contenant ces compositions.

**10.** Produit contenant des compositions selon l'une des revendications 1 à 7.

**11.** Plaques, couvertures de toit ou vitrages contenant des compositions selon l'une des revendications 1 à 7.